# EUROPEAN PATENT APPLICATION

(11) **EP 0 577 995 A2**
(43) Date of publication of application: **12.01.1994**
(21) Application number: 93109384.3
(22) Date of filing: 11.06.1993
(51) Int. Cl.: F16C 29/04

(54) **A linear motion device**

(30) Priority: 10.07.1992 IT TO920178 U
(71) Applicant: TECNO CENTER S.r.l., I-10143 Torini (IT)
(72) Inventor: Masetto, Landis, I-10141 Torino (IT)
(74) Representative: Jacobacci, Filippo

(57) **Abstract**

A linear motion device including a bar with a shaped profile, having inclined guide surfaces and at least one carriage slidable relative to the bar, the said carriage including at least one body carrying axle pins onto which rollers are rotatably mounted for cooperation with the guide surfaces of the bar. The bar (1) has a substantially C-shaped cross-section and the inclined guide surfaces (6) are formed at least in part on the inner surfaces of the two parallel arms (2) of the bar (1) and include, for each of these parallel arms (2), a pair of guide surfaces (6) inclined at 90° to each other and at 45° to the flat outer surfaces of the respective parallel arms (2) of the bar, the two pairs of guide surfaces (6) being arranged symmetrically relative to a median plane parallel to the two parallel arms (2) of the bar (1).

## Description

The present invention relates to a linear motion device of the type including a bar with a shaped cross-section provided with inclined guide surfaces and at least one carriage slidable relative to the bar, the said carriage including a body carrying axle pins on which rollers are rotatably mounted to cooperate with the guide surfaces of the bar.

The object of the invention is to provide a linear motion device of the above specified type which provides effective protection of the rollers and associated guide surfaces, as well as the possibility of connecting external accessories and components to three sides of the bar.

These main aims are achieved by the characteristics claimed in Claim 1.

Further advantages of the present invention, including the possibility of mounting, removing or adjusting the sliding carriages without needing to slide out or remove the bar from its supports, are provided by the characteristics claimed in Claims 2 to 15.

Additional advantages of the invention will become apparent from the following detailed description, with reference to the appended drawings, supplied purely by way of non-limitative example, in which:
Figure 1 is a cross section taken on the line I-I of Figure 2 showing a first embodiment of the device;
Figure 2 is a schematic side view in the direction of the arrow II of Figure 1;
Figure 3 is a cross section taken on the line III-III of Figure 4 showing a second embodiment of the device;
Figure 4 is a schematic side view in the direction of the arrow IV of Figure 3;
Figure 5 is a cross section of a third embodiment of the device, taken on the line V-V of Figure 6;
Figure 6 is a schematic side view in the direction of the arrow VI of Figure 5;
Figure 7 is a cross section taken on the line VII-VII of Figure 6;
Figure 8 is a cross section of a fourth embodiment of the device, taken on the line VIII-VIII of Figure 9;
Figure 9 is a schematic side view in the direction of the arrow IX of Figure 8;
Figure 10 is a cross section of a fifth embodiment of the device, taken on the line X-X of Figure 11;
Figure 11 is a schematic side view in the direction of the arrow XI-XI of Figure 10;
Figure 12 is a cross section taken on the line XII-XII of Figure 11;
Figure 13 is a cross section of a sixth embodiment of the device, taken on the line XIII-XIII of Figure 14;
Figure 14 is a schematic side view in the direction of the arrow of Figure 13;
Figure 15 is a cross section taken on the line XV-XV of Figure 14;
Figure 16 is a side elevation view in the direction of the arrow XVI of Figure 18 showing a device for the telescopic sliding support of one end of the movable bar of the motion device;
Figure 17 is a plan view of Figure 16;
Figure 18 is a section taken on the line XVIII-XVIII of Figure 16;
Figure 19 is a section taken on the line XIX-XIX of Figure 16; and
Figure 20 is a sectional view of a variant of the support device illustrated in Figure 19.

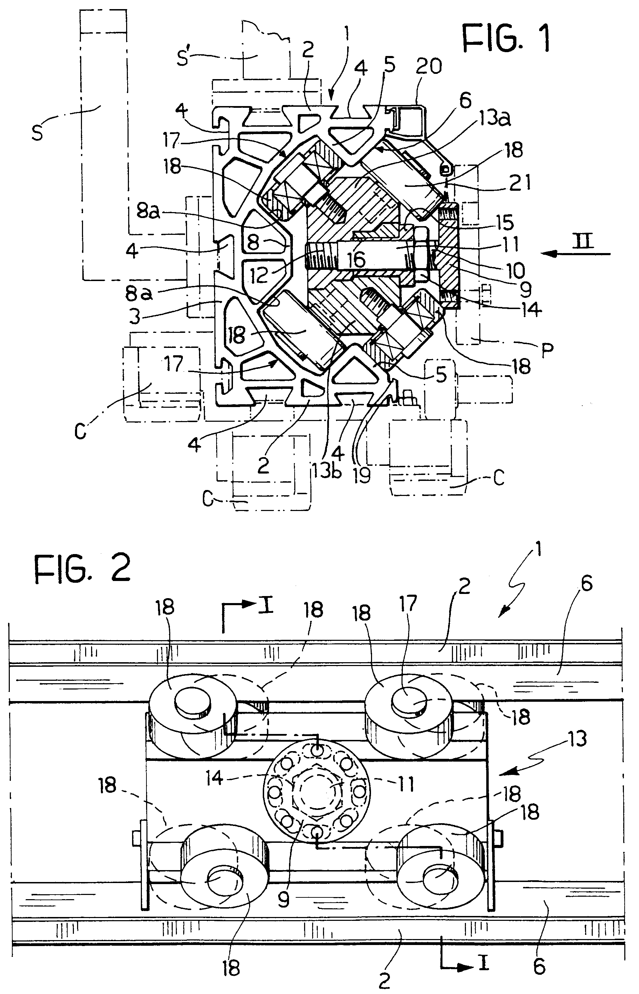

In the example illustrated in Figures 1 and 2, a bar, generally indicated 1, for a linear motion device is constituted by an extruded section, preferably of a light alloy, having a C-shaped section with a pair of parallel sides in the form of arms 2 and a third side 3 perpendicular to the two arms.

Each of the three sides of the bar has grooves 4 with a substantially dove-tail cross-section for the attachment of external accessories or components.

In Figure 1, the dot-dash line illustrates the possibility of fitting a rack C, for moving the bar 1 into either of the two grooves 4 in the lower arm 2, or into a lower groove 4 in the vertical side 3, the possibility of fitting a support S, for example for carrying a workpiece, into another groove 4 in the side 3, and also the possibility of fitting a further support indicated S1 into a groove 4 in the upper arm 2.

Each of the two parallel arms 2 of the bar 1 has an inner V-shaped projection 5.

The flanks 6 of each projection 5 form two guide surfaces inclined at 90° to each other and at 45° to the arms 2 of the bar.

The vertices of the two projections 5 are directed inwardly of the bar and are symmetrically arranged with respect to a median plane parallel to the arms 2 of the bar 1.

The rollers of a carriage supported within the bar 1 by a central support pin cooperate with the inclined surfaces 6 of the two projections 5.

The third side 3 of the bar has an inner trapezoidal projection 8 the flanks 8a of which each face and are parallel to an inner flank of one of the V-shaped projections 5.

The flanks 8a function as rolling surfaces for the rollers of the carriage in the event of an overload, especially if this is due to tilting couples generated by a cantilevered load causing elastic deformation of the C-shaped section.

The support pin has a head 9 in the form of a disc with holes for fixing it to a support plate P.

The shaft comprises a cylindrical shank having a first threaded portion 10, a smooth intermediate portion 11 and a threaded end portion 12 of smaller diameter.

The body 13 of the carriage comprises an upper element 13a and a lower element 13b which are symmetrical and both substantially L-shaped.

The two elements 13a, 13b are clamped to one another by the threaded end portion 12 of the pin being screwed into a threaded hole in the upper element 13a and by the counteracting force against the element 13b of a nut 14 screwed onto the first threaded portion 10.

The nut 14 acts on the element 13b of the carriage by means of the outer flange 15 of an eccentric bush 16 fitted rotatably between the smooth intermediate portion 11 of the pin and a corresponding hole in the element 13b.

The two elements 13a and 13b of the carriage 13 carry axle pins 17 for the rollers 18 which cooperate with the guide surfaces 6.

By slackening the nut 14 it is possible to take up the clearance between the lower rollers of the carriage and their respective guides by turning the eccentric bush 16 with a key that engages the hexagonal peripheral surface of the flange 15 of the bush.

This arrangement makes it possible for the central support pin and the body of the carriage to be removed without having to separate adjacent bars 1 constituted by lengths joined together by connector plates.

In order to provide complete protection for the carriage and the associated rollers, the ends of the two horizontal arms 2 of the C-shaped section have seats 19 in which are snap-fitted or slidably 2 engaged aluminium sections 20 (only one of which is shown in Figure 1) carrying facing brushes 21 or rubber sections thereby completely eliminating the possibility of foreign bodies infiltrating inside the section 1.

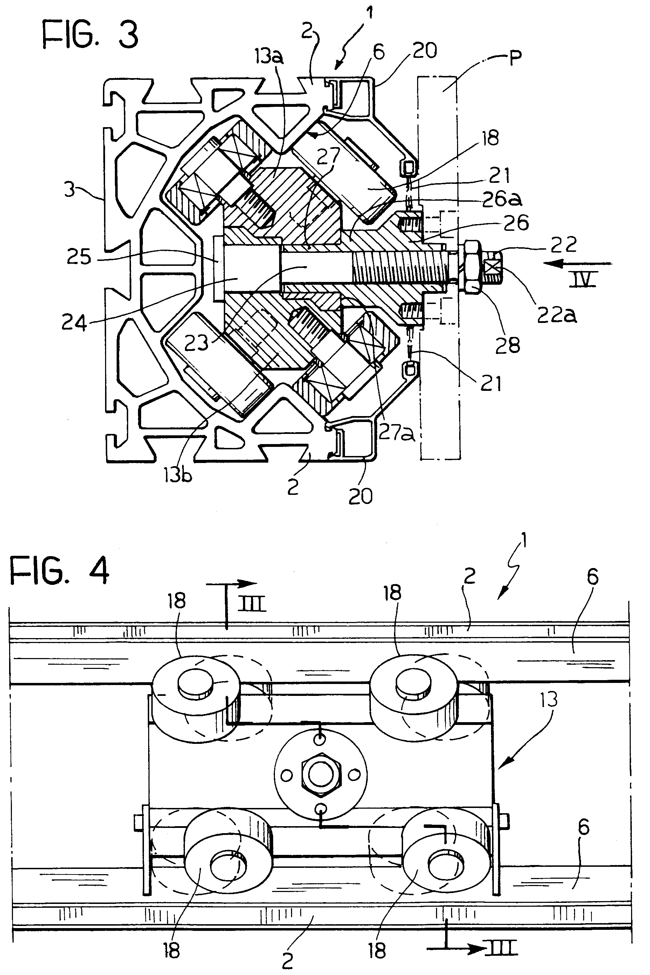

The variant illustrated in Figures 3 and 4 differs from the embodiment illustrated in Figures 1 and 2 by the different shape of the central support pin.

In this second arrangement, the pin has a threaded end portion 22, a cylindrical intermediate portion 23 and an eccentric end portion 24 carrying a head 25 at its end.

Mounted on the cylindrical intermediate portion 23 of the pin is a fixing element with an enlarged end 26, provided with threaded holes so that it may be fixed by screws to a support plate P having a central hole through which the threaded end portion 22 projects. The fixing element also has an intermediate cylindrical portion 26a and a cylindrical end portion 27 of smaller diameter which forms an annular shoulder 27a with the intermediate portion 26a.

The body 13 of the carriage comprises an upper element 13a and a lower element 13b which are substantially L-shaped and symmetrical, the lower element 13b being mounted on the eccentric end portion 24 of the support pin, in contact with the head 25, and the upper element 13a being mounted on the cylindrical end portion 27 of the fixing element, in contact with the annular shoulder 27a.

The two elements 13a, 13b of the carriage are clamped between the head 25 of the pin and the annular shoulder 27a by tightening a nut 28 which is screwed onto the threaded end portion 22 of the pin and reacts against the outer surface of the support plate P.

By loosening the nut 28 and turning the pin by means of a key fitted onto a prismatic seat 22a on the pin itself, it is possible to adjust the clearance between the lower rollers 18 of the carriage 13 and their respective guides 6, as a result of rotating the eccentric portion 24.

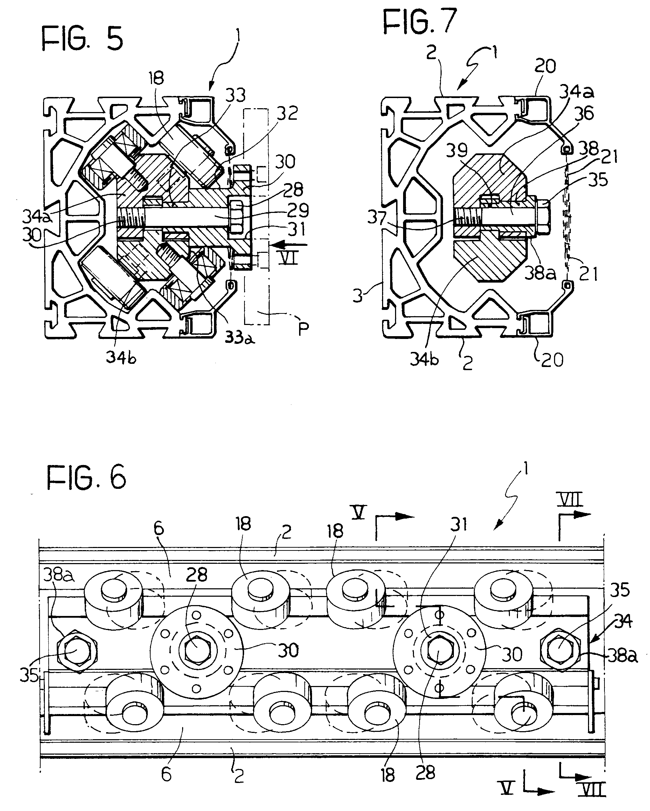

In the variant illustrated in Figures 5 to 7, the carriage is supported by two support pins, each having a hexagonal head 28, a cylindrical shank 29 and a threaded portion 30.

On the cylindrical shank 29 of each pin is mounted a fixing element with an enlarged end 30, provided with threaded holes for screwing it to a support plate P having a central hole for access to the head 28 of the shaft which bears against the end of a seat 31 in the enlarged end 30 of the fixing element.

The fixing element also has a cylindrical intermediate portion 32 and a cylindrical end portion 33 of smaller diameter which forms an annular shoulder 33a with the intermediate portion 32.

The body 34 of the carriage includes an upper element 34a shaped as an inverted U and a lower element 34b shaped as an inverted T, the central rib of which engages between the two parallel arms of the upper element, one of which has a threaded hole, at the position of each support pin, for engagement of the threaded end portion 30 of the pin.

The other arm of the upper element 34a is mounted on the cylindrical end portion 33 of the fixing element, in contact with the annular shoulder 33a, so that by screwing the two pins 29 into the upper element 34a of the carriage the elements 34a and 34b are clamped against the annular shoulder 33a.

The body 34 of the carriage is also provided at its two ends with two adjustment elements, used to adjust the clearance between the lower rollers 18 and the associated guide surfaces 6.

Each of these adjustment elements includes an adjustment bolt having a head 35, a cylindrical shank 36 and a threaded end portion 37 screwed into a threaded hole in the other arm of the element 34a.

On the cylindrical shank 36 is mounted a bush having a hexagonal flange 38a, a cylindrical portion 38 engaging a hole in one of the parallel arms of the upper element 34a, and an eccentric portion 39 engaging a hole in the central rib of the lower element 34b.

It is therefore possible to adjust the clearances between the lower rollers 18 and the associated guides by rotating each of the eccentric bushes 39 by means of the hexagonal flange 38a.

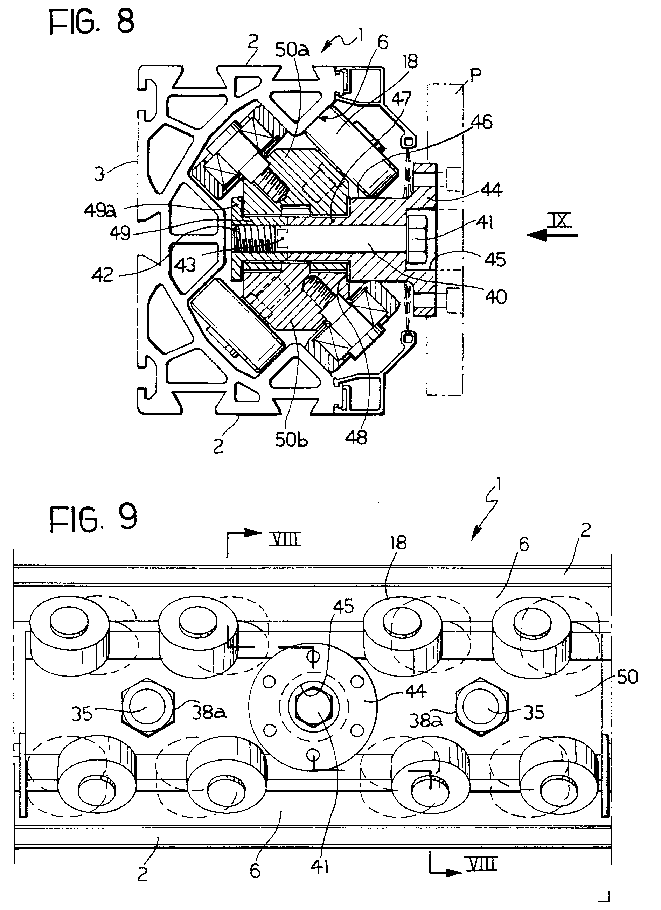

The arrangement illustrated in Figures 8 and 9 is a variant of the embodiment illustrated in Figures 5 to 7 in which a single central support pin is interposed between two adjustment elements, identical to the adjustment elements 35, 38a described with reference to Figure 7.

As shown in Figure 8, the central support pin comprises a cylindrical portion 40 with a hexagonal head 41 and a threaded end portion 42.

On the cylindrical portion 40 of the pin is mounted a fixing element having an enlarged end 44 and holes for fixing it to a support plate P which has a central hole for access to the head 41 of the pin, which bears against a seat 45 in the enlarged end 44, a cylindrical intermediate portion 46, and a cylindrical end portion 47 of smaller diameter having at one end a dog clutch element forming an annular shoulder 48 with the intermediate portion 46.

The cylindrical end portion 47 and the shoulder 48 are coated with a layer of anti-friction material.

A bush 49 is screwed onto the threaded end portion 42 of the pin, having a flange 49a and clutch element connectable with the clutch element of the portion 47 to form a dog clutch 43.

The dog clutch 43 allows the threaded portion 42 to be screwed to the bush 49 by preventing the bush from rotating during screwing.

The outer surface of the bush 49 and the inner surface of the flange 49a are coated with anti-friction material.

The body 50 of the carriage includes an upper element 50a having, as in the preceding example, an inverted U shape and a lower element 50b having an inverted T shape.

The central rib of the lower element 50b engages between the two parallel arms of the upper element 50a, one of which has a hole for receiving the bush 49, the flange 49a of which engages against the outer surface of the said arm.

The other arm of the element 50a is mounted on the anti-friction-coated cylindrical central portion 47 of the fixing element, in contact with the annular shoulder 48 which is also coated with anti-friction material.

Therefore, by screwing the support pin into the threaded hole of the flanged bush 49, 49a by means of the head 41, the two elements 50a, 50b of the body 50 of the carriage are clamped between the flange 49a and the shoulder 48 while, thanks to the presence of the said anti-friction surfaces, the carriage 50 is allowed to oscillate freely so as to compensate for any misalignment of the bar.

Clearances between the lower rollers 18 and the associated guides 6 are adjusted by acting on the elements 35 and 38a of the two adjustment elements as for the preceding example described above.

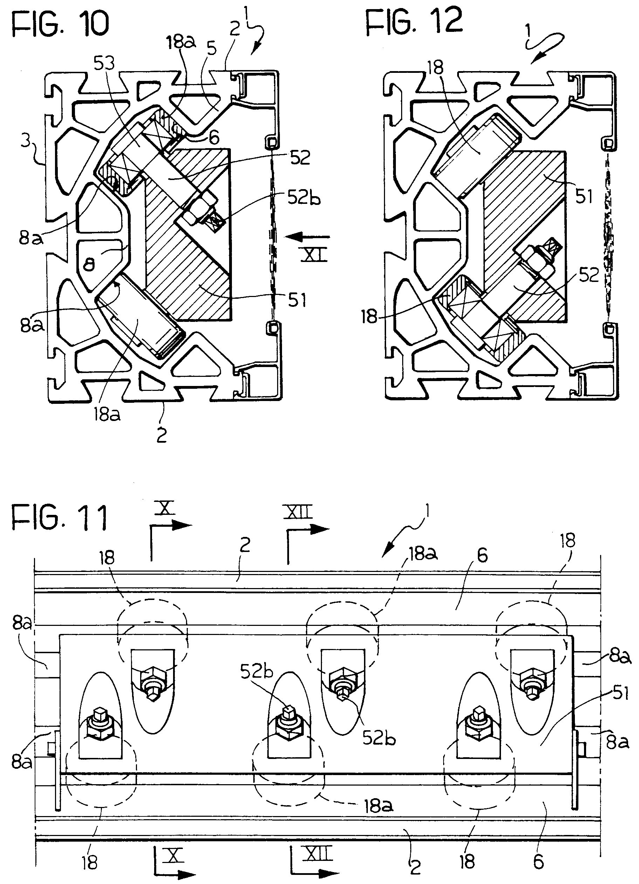

The variant illustrated in Figures 10 to 12 relates to a simplified arrangement having small transverse dimensions, which is particularly suited to arrangements in which the bar is fixed and the equipment is slidable together with the carriage.

In this arrangement, only the inner surfaces 6 of the two V-shaped projections 5 of the two arms 2 of the section 1, and the two inclined flanks 8a of the inner trapezoidal projection 8 on the third side 3 of the section 1 are used as guide surfaces for the rollers.

The body 51 of the carriage is made in one piece and carries two pairs of end rollers 18 and one pair of central rollers 18a on axle pins 52.

The rollers of each pair are axially offset and cooperate with alternate guide surfaces 6 and 8a.

The axle pins 52 of the pair of central rollers 18a have an eccentric portion 53 for supporting their respective rollers so as to permit clearances to be adjusted by rotation of the shafts, effected, after loosening the respective fixing nuts, by means of a key on the prismatic end portion 52b of each axle pin.

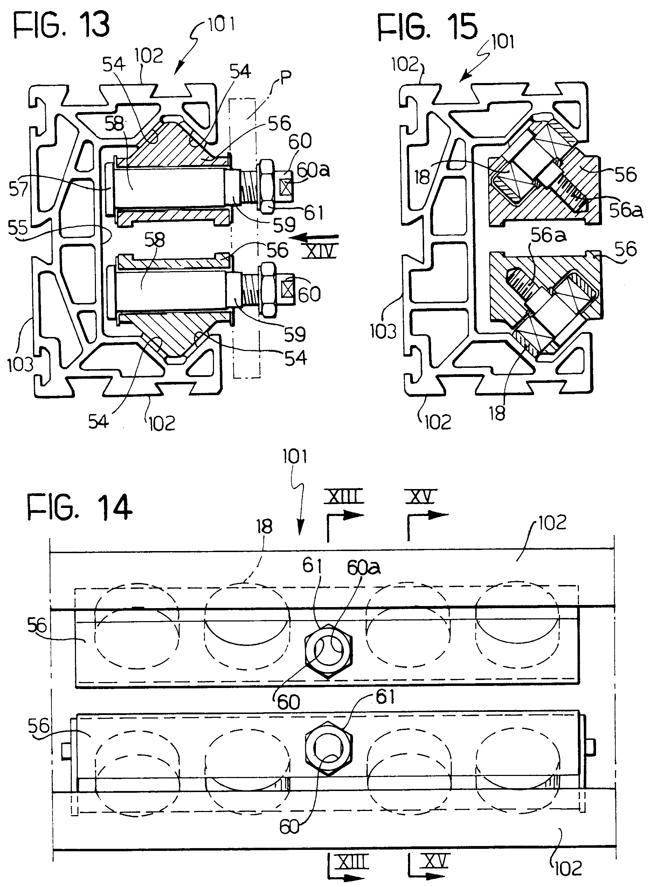

In the variant illustrated in Figures 13 to 15, the facing inner surfaces of the two parallel arms 102 of the bar 101 each have a V-shaped groove, the vertex of which is directed outwardly of the bar and the flanks 54 of which form one of the pairs of guide surfaces.

The inner surface of the third side 103 of the bar 101 is a flat surface 55 parallel to the outer surface.

In this arrangement, the body of the carriage comprises two separate elements 56, spaced one above the other, each of which is fixed to a support plate P by means of a support pin.

Starting at its inner end, each support pin has a head 57 bearing against the body 56 of the carriage, an eccentric first portion 58, a cylindrical portion of smaller diameter 59 engaging a hole in the support plate P and a threaded end portion 60 onto which a nut 61 is screwed to exert a force against the inner surface of the support plate.

The portion 58 of the support pin and the two end shoulders of the body 56 of the carriage are coated with anti-friction material.

The end of the threaded portion 60 has a prismatic seat 60a.

By tightening the nut 61 each element of the carriage 56 is therefore clamped between the head 57 and the support plate P.

Each element of the carriage 56 has rollers 18, carried on shafts 56a, which cooperate with alternate guide surfaces 54.

It is therefore possible, by loosening the nuts 61 and rotating the support pins by means of a key on the prismatic seat 60a, to take up clearance between the rollers and their respective guides while permitting the bodies 56 to oscillate freely, thanks to their anti-friction surfaces, so as to compensate for any misalignment of the bar.

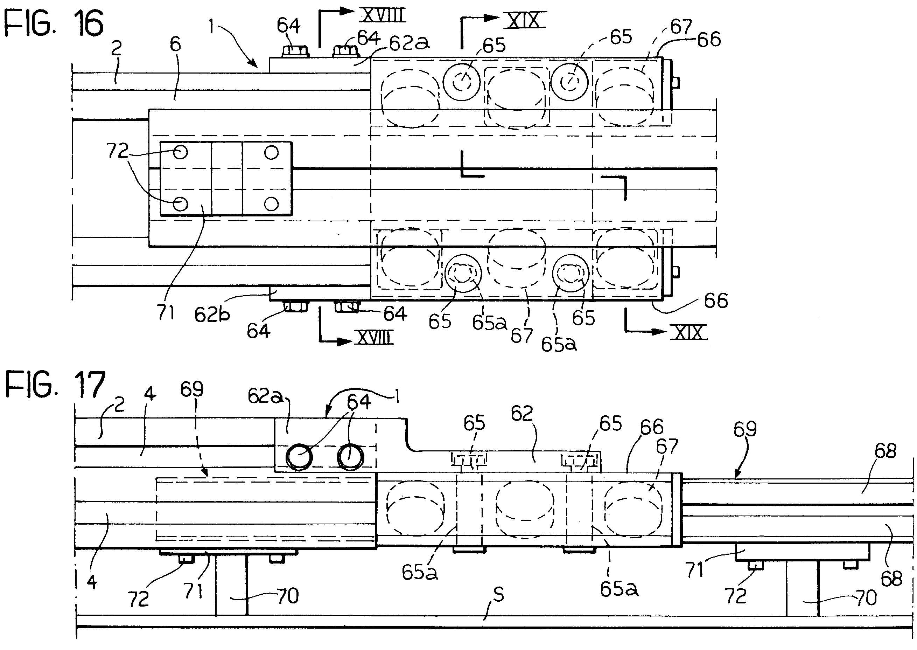

The embodiment illustrated in Figures 16 to 19 relates to the support, at each of its ends, of a bar 1 of the type illustrated in Figures 1 to 12 slidably mounted relative to a fixed structure.

In this case, a vertical support plate 62 is fixed at each end of the bar 1 by means of an upper projection 62a and a lower projection 62b so as to extend from the end of the bar 1.

Each of the two projections 62a and 62b has a dovetail element 63 which fits into one of the grooves 4 in the upper face 2 of the bar 1 with fixing being completed by screws 64 with cylindrical plain ends.

Two carriages 66 are fixed to the vertical plate 62 by bolts 65 and have rollers 67 engaging inclined guide surfaces 68 on a shaped-section guide bar 69 which is supported by the fixed structure S by means of horizontal bars 70 to the ends of which are fixed plates 71 which are also fixed to the guide bar 69 by bolts 72.

The guide bar 69 is constituted by an extruded section in a light alloy of the type forming the subject of the ornamental model application No. 53272-B/90 of September 28, 1990 by the same Applicant.

This section has two vertical major sides, parallel to each other and connected, at each end, by a pair of shorter sides, inclined at 90° to each other to form a V-shaped groove with its vertex towards the inside of the section, the flanks of the two grooves forming the guide surfaces 68 for the rollers 67.

The bolts 65 which fix the lower carriage 66 have an eccentric portion 65a, the rotation of which enables clearance between the lower rollers 67 and the respective guides 68 to be taken up.

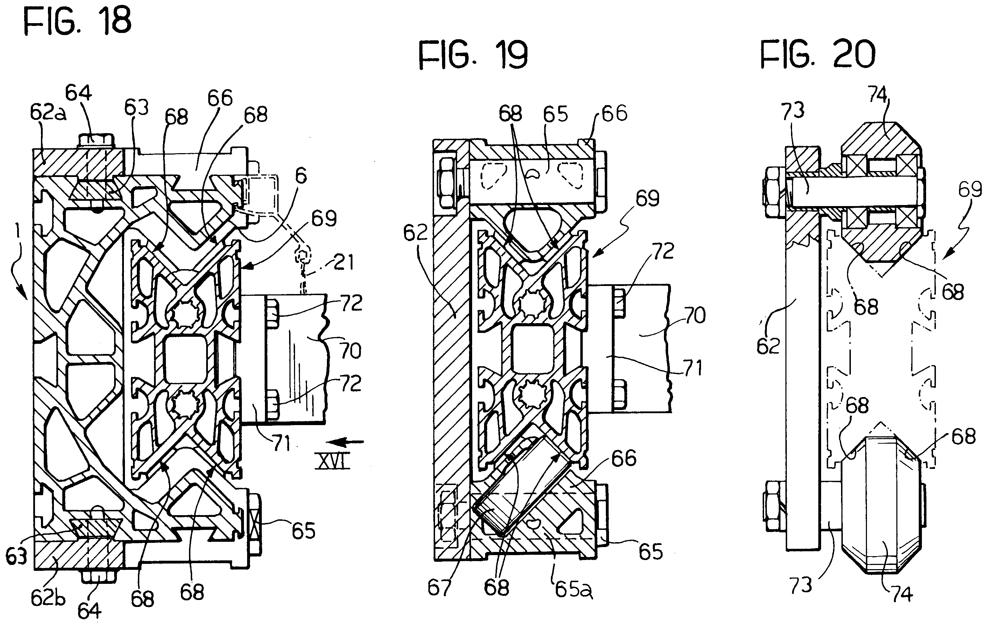

In the variant illustrated in Figure 20, the shafts 73 for a series of rollers 74 having a peripheral section suitable to engage both guide surfaces 68 of the respective V-shaped grooves in the guide section 69 are fixed directly to both the upper end and the lower end of the vertical support plate 62.

Naturally, the principle of the invention remaining unchanged, the structural details and embodiments may be widely varied from those described and illustrated purely by way of non-limitative example, without departing from the present utility model.

## Claims

1. A linear motion device including a bar having a shaped cross-section, with inclined guide surfaces and at least one carriage slidable relative to the bar, the said carriage including a body carrying axle pins on which rollers are rotatably mounted for cooperation with the guide surfaces of the bar, characterised in that the bar has a substantially C-shaped section and in that the said inclined guide surfaces are formed, at least in part, on the inner surfaces of the two parallel arms of the bar and include, for each of these parallel arms, a pair of guide surfaces inclined at 90° to each other and at 45° to the flat outer surface of the respective arm, the two pairs of guide surfaces being arranged symmetrically relative to a median plane parallel to the said two parallel arms of the bar.

2. A device according to Claim 1, characterised in that the facing inner surfaces of the two parallel arms of the bar each have a V-shaped projection the vertex of which is directed inwardly of the bar and the two flanks of which form one of the said pairs of guide surfaces.

3. A device according to Claim 2, characterised in that the inner surface of the third side of the bar, which extends perpendicular to the parallel arms, has a trapezoidal projection with two inclined flanks, each of which faces and is parallel to one of the guide surfaces formed by the inner flank of one of the said V-shaped projections.

4. A device according to Claim 2, characterised in that the body of the carriage is supported inside the C-section bar by at least one support pin which projects within the bar in a direction perpendicular to the third side of the bar and has at its outer end a fixing portion for fixing it to a support plate.

5. A device according to Claim 4, characterised in that it includes a central support pin with a cylindrical shank and an integral plate-like head with holes for fixing it to a support plate, the said cylindrical shank having a threaded first portion, a smooth intermediate portion and a threaded end portion of smaller diameter, and in that the body of the carriage comprises an upper element and a lower element which are symmetrical and substantially L-shaped and are clamped against one another by the effect of screwing the threaded end portion of the pin into a threaded hole in one of the two elements and of the opposing force against the other element of a nut screwed onto the threaded first portion of the shank; the said nut acting on the outer flange of an eccentric bush rotatably interposed between the smooth intermediate portion of the pin and a corresponding hole in the upper element so that, when the nut is loosened, it is possible to take up the clearance between the lower rollers of the carriage and respective guides by rotating the eccentric bush (Figures 1 and 2).

6. A device according to Claim 4, characterised in that:
- it includes a support pin having a threaded end portion, a cylindrical intermediate portion and an eccentric end portion carrying a terminal head,
- on the cylindrical intermediate portion of the pin there is mounted a fixing element which has an enlarged end provided with threaded holes for fixing it by screws to a support plate with a central hole through which the threaded end portion projects to the exterior, a cylindrical intermediate portion and a cylindrical end portion of smaller diameter which forms an annular shoulder with the intermediate portion.
- the body of the carriage comprises an upper element and a lower element which are symmetrical and substantially L-shaped, the lower element being mounted on the eccentric end portion of the pin in contact with the terminal head and the upper element being mounted on the cylindrical end portion of the fixing element, in contact with the said annular shoulder,
- the first and the second elements of the carriage body are clamped to one another by the effect of screwing a nut onto the threaded end portion of the pin to oppose the outer surface of the support plate so that, when the nut is loosened, it is possible to adjust the clearance between the lower rollers of the carriage and respective guides by rotating the pin (Figures 3 and 4).

7. A device according to Claim 4, characterised in that:
- it includes two support pins, each of which has a hexagonal head, a cylindrical shank and a threaded end portion,
- a fixing element is mounted on the cylindrical shank of each pin, having an enlarged end with threaded holes for screwing it to a support plate with a central hole for access to the head of the pin which bears against the end of a seat in the said enlarged end, a cylindrical intermediate portion and a cylindrical end portion of smaller diameter which forms an annular shoulder with the cylindrical intermediate portion,
- the body of the carriage includes an upper, inverted U-shaped element and a lower, inverted T-shaped element, the central rib of which engages between the two parallel arms of the upper element, one of which has a threaded hole in correspondence with each pin for engaging the threaded end of the pin, and the other of which is mounted on the cylindrical end portion of the fixing element, in contact with the said annular shoulder, so that by tightening the two pins the body of the carriage is clamped against the annular shoulder,
- the body of the carriage also includes two adjustment elements, one at each end, for adjusting the clearance between the lower rollers and the guide surfaces, each adjustment element including a bolt with a head, a cylindrical shank and a threaded end part screwed into a threaded hole in the other arm of the U-shaped element, and in that a bush is mounted on the cylindrical shank having a hexagonal flange, a cylindrical part which engages a hole in one of the parallel arms of the U-shaped upper element and an eccentric part engaging an elongate hole in the rib of the T-shaped lower element so that by rotating the said flanged bushes, by means of the hexagonal flange, it is possible to take up the clearances between the lower rollers and the guides (Figures 5 to 7).

8. A device according to Claim 4, characterised in that
- it includes a central support pin in two parts having a cylindrical part with a hexagonal head and a threaded end part,
- on the cylindrical part of the pin is mounted a fixing element having an enlarged end with holes for fixing it to a support plate having a central hole for access to the head of the pin, which bears against a seat in the said enlarged end, a cylindrical intermediate part and a cylindrical end part of smaller diameter which has a dog clutch element and forms an annular shoulder with the intermediate part; the cylindrical end part and the shoulder are coated with a layer of anti-friction material,
- on the threaded end part of the pin a bush is screwed which has a flange and a clutch element which can be coupled to the clutch element of the end part of the fixing element so as to form a dog clutch; the said bush being coated with anti-friction material on its outer cylindrical surface and on the inner surface of the flange,
- the body of the carriage includes an upper, inverted U-shaped upper element and a lower, inverted T-shaped element, the central rib of which engages between the two parallel arms of the upper element, one of which has a hole for engaging the said flanged bush with the anti-friction surface of its flange in contact with the outer surface of the said arm and the other of which is mounted on the anti-friction coated cylindrical end part of the fixing element, in contact with the anti-friction coated annular shoulder so that, by screwing the said pin into the threaded hole in the flanged bush, the two parts of the body of the carriage are clamped between the bush flange and the shoulder while allowing the carriage to turn freely, due to the presence of the said anti-friction coated surfaces, so as to compensate for any misalignment of the bar,
- on the two sides of the central pin, the body of the carriage also includes two adjustment elements for adjusting the clearance between the lower rollers and the guide surfaces of the bar,
- each of the adjustment elements includes an adjustment bolt having a head and a cylindrical shank on which is mounted a bush with a hexagonal flange (Figures 8 and 9).

9. A device according to Claim 3, characterised in that:
- the flanks of the trapezoidal projection form a pair of guide surfaces, each of which faces and is parallel to the guide surface formed by the inner flank of one of the said V-shaped projections,
- the body of the carriage is in one piece and carries three pairs of rollers, the rollers in each pair being axially offset so as to cooperate with said guide surfaces,
- the axle pins of the central rollers have an eccentric roller-support part so as to permit clearances to be adjusted by rotating the axle pins themselves (Figures 10 to 12).

10. A device according to Claim 1, characterised in that
- the facing inner surfaces of the two parallel sides of the bar each have a V-shaped undercut the vertex of which is directed outwardly of the bar and the sides of which form one of the said pairs of guide surfaces,
- the body of the carriage comprises two separate, superimposed elements, each of which is fixed to a support plate having a head at one end and a threaded portion at the other onto which a nut is screwed which reacts against the support plate, the rollers of each element of the carriage alternately engaging the guide surfaces of one of the said two undercuts,
- both on the shoulders and on the cylindrical portion, the support pins are coated with anti-friction material and each have an eccentric portion for supporting an associated carriage so as to permit adjustment between the rollers and the respective guides while allowing the elements of the carriage to turn freely, due to the anti-friction surfaces, so as to compensate for any misalignment of the bar (Figures 13 to 15).

11. A device according to any preceding Claim, characterised in that the edges at the ends of the parallel arms of the C-shaped bar have seats for engaging two sections carrying flexible seal elements, provided so as to prevent any foreign bodies from infiltrating the interior of the bar.

12. A device according to Claim 11, characterised in that the seal elements include aligned bristles forming a brush.

13. A device according to Claim 11, characterised in that the seal elements are constituted by rubber sections or the like.

14. A device according to any preceding Claim, characterised in that, if the C-shaped bar is slidable with respect to a carriage supported by a fixed structure, a vertical support plate is fixed, by upper and lower projections, to each end of the bar so as to project from this end and support rollers which engage inclined guide surfaces on a shaped-section guide bar supported by the said fixed structure, the said guide bar being constituted by an extruded section having two larger, vertical parallel sides connected at each end by a pair of smaller sides inclined at 90° to each other and forming a V-shaped groove, the vertex of which is directed inwardly of the bar and the sides of which form the guide surfaces for the rollers (Figures 16 to 20).

15. A device according to Claim 14, characterised in that, at each end of the vertical support plate, two carriages are fixed by bolts and carry the axle pins on which rollers are rotatably mounted for cooperation with inclined guide surfaces of the corresponding V-shaped grooves and in that the bolts fixing the lower carriage have an eccentric surface, the rotation of which permits clearances to be taken up between the lower rollers and respective guides (Figures 16 to 19).

16. A device according to Claim 14, characterised in that the axle pins for a series of rollers having a peripheral profile adapted to engage both guide surfaces of the respective V-shaped groove of the guide section are fixed directly at both the upper and the lower end of the vertical support plate (Figure 20).
